# EUROPEAN PATENT APPLICATION

(11) **EP 2 169 954 A1**
(43) Date of publication of application: **31.03.2010**
(21) Application number: 08290900.3
(22) Date of filing: 24.09.2008
(51) Int. Cl.: H04N 7/173, H04L 12/56, H04L 29/06

(54) **Service configuration and management for fast channel change and reliable delivery of multimedia services**

(71) Applicant: Alcatel Lucent, 75008 Paris (FR)
(72) Inventor: Kisel, Andrey, Maidenhead Berkshire SL6 8DH (GB); Beecroft, Peter, Caldecote Cambridgeshire CB23 7ZW (GB); Robinson, Davie Cecil, Aldbourne Wiltshire SN8 2NP (GB)
(74) Representative: Kensett, John Hinton

(57) **Abstract**

A data network comprising a node serving a local area, the node comprising an FCC/Retr (fast channel change/retransmission) server having a means for installing a location based FCC/Retr service profile, wherein the service profile is self-discovered by the module. Methods for configuring the profile are discussed.

## Description

### Background of the Invention

This invention relates to service configuration and management for fast channel change (FCC) and reliable delivery of multimedia services, such as IPTV, Cable TV or Internet TV services.

Broadcast channels in IPTV (internet protocol television) are typically transmitted using IP multi-cast techniques. Broadcast channels in Cable TV are typically transmitted using RF transmission techniques.

Early trials and deployment of IPTV contained a very limited set of VOD (video on-demand) titles, a small number of subscribers and were mainly used as a complimentary on-demand service to traditional broadcast methods. However, as IPTV becomes more successful and more widely deployed, it is required to provide many more VOD titles and broadcast channels, such as 5,000 VOD titles and hundreds of broadcast channels and each service provider may have many subscribers, perhaps extending well into the millions. Thus, it is now beginning to rival traditional broadcast or satellite systems.

A traditional advantage of IP systems is the existence of a return IP path, which offers means for real-time interactivity and control over the same infrastructure as service delivery. Similarly, there is a return path in Cable TV systems. However, in order to capitalise on the interactivity, the IPTV or cable TV service should most preferably offer better or at least the same user experience and quality of service as more traditional services, eg analogue aerial broadcast TV channels.

Unlike traditional broadcasting, typically not all TV channels are immediately available to a client in an IPTV system, due to its multicast delivery nature. In addition, digital differential encoding is used. Essentially this means that the TV picture is sent as a key frame then a series of incremental frames which only include data which has changed from one incremental frame to another. After a number of incremental frames (typically 20) are transmitted, a further key frame is transmitted and so on. This means that a user of client equipment when 'tuning' to a new channel suffers an inherent delay since the channel cannot begin to be properly displayed until a key frame is received. Thus, joining a stream is possible only at the key frames or at random access points (RAP) at the beginning of a fully encoded video frame.

The two factors described above contribute to relatively slow channel change times in IPTV systems.

In order to improve the channel changing experience, FCC servers have been used. An FCC server caches a sliding window of content (eg the last 30 seconds or last minute) of a broadcast channel. The content can later be delivered upon a channel change request from a client apparatus starting from an RAP, optionally at a higher than encoded bit rate. This can be done so that although a client initially receives an RAP which might be, say seconds behind 'real time', the system then catches up by missing frames selectively so that after a relatively short period the user is watching effectively live transmission. This of course enhances the experience when the user is watching a live sports event or similar.

The FCC server is typically pre-configured/provisioned with a set of BTV (Broadcast TV) channels (multi-class addresses) to be cached. In order to scale this, a distributed architecture has previously been adopted. This comprises a set of FCC servers which are close to the network edge/access node, for example these FCC servers might be placed in a DSLAM (Digital Subscriber Line Access Multiplexer).

Quality of delivery (QOD) has similar requirements. Due to the unreliable nature of IP delivery, a loss of data packets can occur which can degrade viewing experience. In order to guarantee delivery of high value and consistent multimedia data, Retr (Retransmission) servers have been developed. A Retr server caches a sliding window of content on a broadcast channel. The missing data can later be delivered upon a client Retr request. In essence, if parts of the data received by the client are corrupt or incomplete it can request retransmission (Retr) of these.

The distributed architecture of a typical FCC/Retr system, together with a large number of servers in the network edge, regional variations in a channel list, local variations in channel popularity and variations of channel popularity over time, requires a special approach to deploying a FCC/Retr system. When we say FCC/Retr server (or unit server) we imply that the server can provide either FCC service or Retr service or both.

Complexities arise because there are many channels available and an FCC system may not need (or be capable of dealing with) all channels. Also the channel layouts might be regionalised (for example in the UK a channel such as BBC1 may have regional variations) and so different versions of this would be desired by client in different geographical areas of the country. Thus, the actual channel information that each FCC server caches may vary geographically and also temporally.

### Description of the Prior Art

A presently available system is Microsoft^{™} TV:
http://www.microsoft.com/tv/default.mspx
http://www.ixiacom.com/products/display?skey=aptixia_ixload_ms_iptv
http://www.microsoft.com/msft/download/Transcripts/FY06/ChristineHeckart09200 6.doc.
Microsoft TV uses manual static provisioning via an IPTV platform to configure an FCC/Retr server known as a distribution server (D server). D servers are typically employed together in a local office called a branch. A system operator is required to manually configure each D server with a list of channels. The D server caches the channels and can later deliver them via proprietary means upon a channel change request to a client user equipment (UE). The platform exposes channels supported by each D server via a web interface.

Generally, service discovery and selection has been standardised between user equipment (UE) and IPTV middleware for traditional IPTV services such as content, video on-demand (COD/VOD) and BTV. However, these solutions do not cover FCC or Retr services, not their respective configuration and are not applicable for the servers deployed in the network.

Each FCC/Retr server is uniquely configured to support FCC/Retr service for a certain number of channels (eg typically tens of channels). An end user (eg client STB(set top box)), requiring fast channel change to a certain channel, requests access to this channel from the FCC/Retr server. If the channel is cached therein it is provided as a FCC or Retr channel. Otherwise, the end user receives the channel from a normal multicast but this will not be cached and so will not have the benefits of FCC/Retr so may take some time before it can be viewed by the user. Likewise, for the quality of service if some of the multimedia data has been lost or corrupted during the delivery, the end user can request redelivery of the lost data from FCC/Retr server. If the Retr service is not supported for the channel, then QoS will degrade following loss of multimedia data.

Existing solutions are based upon manual provisioning. With manual provisioning it is difficult to perform the following tasks, amongst others:
configuring servers in the network without introducing the possibility of human error;
automatically reassigning an FCC/Retr server to provide FCC/Retr service for different channels to take into account regional channel variations at network edge locations;
automatically reassigning an FCC/Retr server to provide FCC/Retr service for different channels to efficiently factoring local variations of channel popularity and time variations of channel popularity (eg a sports channel may be much in demand when a popular sports event is being shown but may be in low demand at another time), and:
automatically enhancing channel reassignment for a given FCC/Retr unit by correlations with recommendation engines.

These can all involve high costs and the possibility of human error in the manual provisioning. Furthermore, these servers are shared among branch customers and located in a branch office, which means that the content is cached further away from the end user than is desirable.

The present invention arose in an attempt to provide an improved system.

### Summary of the Invention

According to the present invention, in a first aspect, there is provided an IPTV (Internet Protocol TV), cable or Internet TV data network comprising a node serving a local area with IPTV service, the node comprising an FCC/Retr (fast channel change/retransmission) server having a means for installing a personalised service profile, wherein the personalised service profile is self-discoverable.

Preferably, the personalised profile is installed at boot-up. It is advantageously dynamically variable over time.

Most preferably, the FCC/Retr server is adapted to supply network identification to a service configuration server, the server being arranged to generate a personalised service profile corresponding to the location of the FCC/Retr server and provide this to the FCC/Retr server and the FCC/Retr server comprising means for installing the service profile.

In a further aspect, there is provided a method of configuring service profiles of an IPTV system on a network, comprising providing a node serving a plurality of users in a locality, the module including an FCC/Retr (fast channel change/retransmission) node, the method comprising using self-discovery of a personalised service profile in order to populate the node with one or more service profiles.

The invention also provides a method of operating an IPTV service over a network, including a configuration method as described above.

In a further aspect, there is provided an Access Node adapted for self-discovery of the personalised service profile, in an IPTV environment. The method can similarly be applied to cable TV or Internet TV environment. The Access Node may be a DSLAM (Digital Subscriber Line Access Multiplexer).

The present invention allows for automatic configuration of servers in network edge locations taking into account regional channel variations; local variations of the channel popularity; time variations of the channel popularity; and correlation of FCC/Retr service with channel recommendations.

It also supports a higher number of localised service profiles (which can be auto managed) with higher granularity of service personalisation for local preferences, eg automatically adaption to ethnic/cultural/age and other variations in end user population.

The invention applies to traditional IPTV, Internet TV or cable TV environments.

### Description of the Drawing

Embodiments of the invention will now be described, by way of example only, with reference to the accompanying drawing which shows an embodiment of a distributed FCC/Retr architecture.

### Detail Description of Embodiments of the Invention

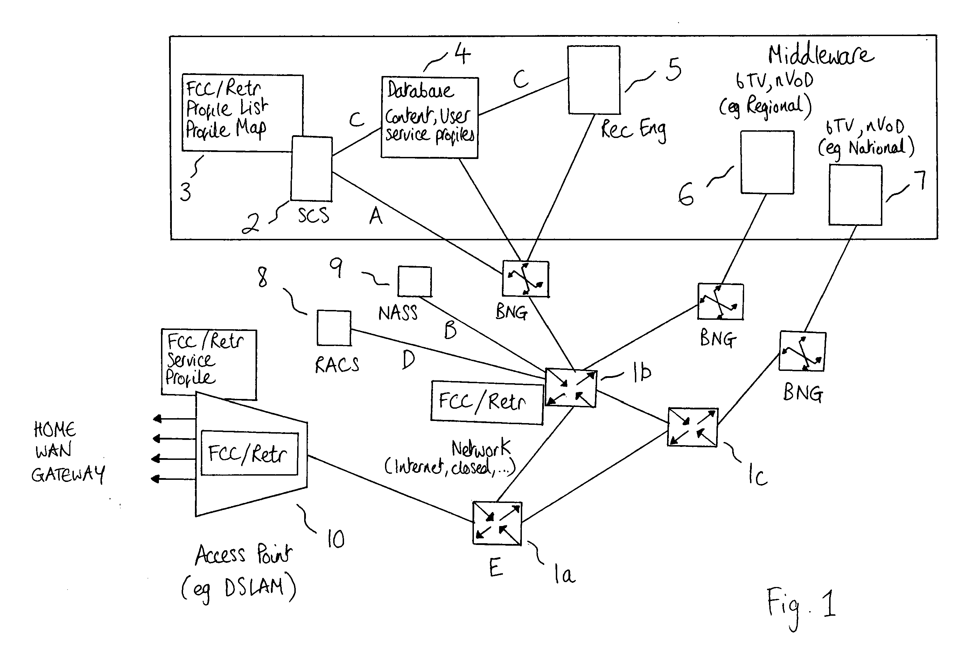

Referring to the sole figure, Figure 1 presents one embodiment of a distributed auto-configurable FCC/Retr architecture comprising a local FCC/Retr server 10 provided at an Access Node, eg DSLAM (Digital Subscriber Line Access Multiplexer) at the network edge. Further up the network is provided a Service Configuration Server (SCS) 2, having access to a list of service profiles (eg containing channels, packages, offers), content profiles (eg containing content metadata) and user profiles (eg containing subscribed services, broadband line bandwidth) and an IPTV middleware database 4. SCS can generate location based FCC/Retr service profile maps 3: a list of channels to be cached at a particular location for FCC/Retr services. The map 3 can be generated based upon:
- location of the originating request;
- user profiles served from the location;
- service profiles;
- channels popularity;
- output from the recommendations engine.

For example, SCS can analyze all user profiles for the locations, find all channels, which the users are subscribed to, optionally determine the most popular channels and optionally include channels recommended by the recommendation engine to generate location based FCC/Retr service profile map 3. In addition, the SCS may check that the line bandwidth of the users are sufficient to provide FCC/Retr service for the channel before including the channel into the map 3.

The figure also shows other components of the architecture, including a recommendation engine (Rec Eng) 5, several sources of bTV (broadcast TV) and nVOD (near video on-demand) 6, 7, having regional and national channels, a resource and admission control server (RACS), network attachment sub-system (NASS) and a plurality of servers 1, located up the network. One of these, 1b, has an FCC/Retr server inside or alongside. A plurality of user equipment (UEs) (not shown) (eg set-top boxes) will be connected to the DSLAM, which is provided at local exchange for example, to service a certain area. A number of such UEs in a locality will be connected to the DSLAM, and will receive Internet service and send channel service requests to this. They may be connected to the DSLAM by ADSL lines for example.

The FCC/Retr will provide service for a specific location (eg Maidenhead, Oxford, South West London and so on). In a broader architecture, of course many such FCC/Retr's will be provided - each serving a particular location. A number of BNG's (broad network gateways) are also shown. The other FCC/Retr's, of which just some are shown, and which are deeper within the network, will be used to provide access of more channels than the 'local' ones such as server 10, which serves a particular local area.

Embodiments of the invention require only minimal identification information to boot up and manage service at the FCC/Retr server. Such minimal information may include:
- network identification of FCC/Retr server 10 such as an IP address (eg automatically obtained via DHCP (dynamic host configuration protocol) or alternative automated means);
- network identification of SCS server 2 such as an IP address (can be obtained via DHCP, DNS (domain name system), or other automated means).

At boot-up, the FCC/Retr is provided with a 'personalized' FCC/Retr service profile as discussed below.

An example of a FCC/Retr service bootstrap workflow is as follows, illustrated by steps A to E in the figure:
A. The FCC/Retr server 10 supplies network identification (eg its IP address) to the SCS 2.
B. The SCS 2 retrieves the location using supplied network identification from NGN NASS (next generation networks - network attachment sub-system) (or via alternative means, eg from the local maps).
C. The SCS generates an FCC/Retr service profile corresponding to the location. The profile itself is derived from other service profiles available in the platform (eg IPTV middleware), popularity, and optionally a recommendation engine as discussed above. This is obtained by keeping records of this data in the middleware database 4. For example, the SCS generates location based FCC/Retr service profile maps 3 by analyzing all user profiles for the locations, finding all channels which the users are subscribed to, evaluating the most popular channels and including channels recommended by the recommendation engine. In addition, the SCS may check that line bandwidth of the users are sufficient to provide FCC/Retr service for a channel before including the channel into the map 3.
D. Optionally, for channels not locally available at the FCC/Retr server, network resources can be allocated to ensure QoS during acquisition of FCC/Retr channels at the location, eg by contacting a RAC server (if supported) via the RACS 8.
E. The FCC/Retr initiates service according to the supplied location based FCC/Retr service profile map.

The SCS server periodically updates the profile either automatically (eg if a raise in channel popularity is detected by analysis of database 4 for example) or manually (if new channel is manually added) and the FCC/Retr server 10 updates the service list either a via push or pull mode. That is, either the data is pushed automatically to the server 10 each time it is changed, or the server 10 periodically or occasionally requests (pulls) the service profile. Thus, if a particular channel becomes more popular it is added to the profile. This may be for example a sport channel when a popular event is broadcast, or a news channel when a news event breaks, or otherwise.

In an example, a set of network edge FCC/Retr servers may cache 30 most popular channels, while a larger set further up the network can cache several hundred channels. The decision of which channels are cached locally at the edge can be determined from, amongst other factors, the location, popularity, recommendations, profiling as illustrated above.

An example of a service profile is as follows:
The profile takes the general form
   {Profile - Channel - Local (IP address to capture from)/Remote (IP address to redirect or retrieve from) - Master FCC IP (can be shared) - Master Retr IP (can be shared) - Other}
Thus, an example is:
   London SW - BBC1 - Local(225.1.1.1) - 172.1.1.1 - 182.1.1.1 - Other
      BBC2 - Local(225.1.1.2) - 172.1.1.1 - 182.1.1.1 - Other
      BBC3 -Remote(192.1.1.1) - 172.1.1.1 - 182.1.1.1 - Other
      London News - Local(225.1.1.4) - 172.1.1.4 - 182.1.1.4 - Other ...

Thus, the profile name is 'London SW' in the above example, and the channels are BBC1, BBC2, BBC3. Of these, BBC1 and BBC2 are cached locally to provide FCC/Retr service (reflecting localized interest) from different source addresses, and BBC3 is cached at the remote server (further up the network) source, reflecting the fact that BBC3 is less popular at the location.

Hence, when a user (at a UE, eg set top box/display) requests a particular channel or VOD content, this request is passed to the corresponding FCC/Retr server (e.g. co-located with a DSLAM ), which then uses the profile to determine when and how to retrieve the channel. Locally cached channels are obtained quickly using the local FCC/Retr.

The sources (eg 225.1.1.1, 172.1.1.1, 225.1.1.2) servers are multicast addresses of broadcast TV channels.

The 'full' profile eg 'London SW' will contain a plurality of channel entries, perhaps 30 for example although it may be considered more or less than this. The profile is loaded at boot up then is changeable dynamically as certain channels popularity, use profile, etc alters.

Example of the profile-location map:
{Profile - Network ID group - Other}
London SW - 199.1. * . * - Other
London Chelsea - 199.2.*.* - Other
London Westminster - 199.3.*.* - Other

As discussed above, in the prior art solution each FCC/Retr server is statically pre-provisioned for certain number of FCC channels (which may be the same across multiple servers).

In the method of the present invention however, the FCC/Retr server is dynamically associated with the service profile at boot-up time taking into account location. The service profile itself can be dynamic and flexible taking into account popularity, user profiles, recommendations, local ethnic / cultural /age and other variations in end user population.

Due to the automated dynamic nature of profile management and mapping to FCC/Retr servers larger number of service profiles can be supported. This offers better service granularity reflecting particular service requirements of smaller geographical areas with much reduced costs.

One way to reduce cost of an IPTV solution is to develop an automated and self-configurable added value services reducing operator's involvement into the installation, operation and management. That means that the added value services are integrated into the converged solution and human evolvement into data provisioning and reconfiguration is reduced to the minimum required level. It also means that there is no need to deploy a dedicated platform for added value service management and that manual duplication of service, user or content profiles is minimised.

The invention introduces self configuration into the new added value IPTV services: fast channel change (FCC) and reliable delivery (Retr).

## Claims

1. An IPTV, cable or Internet TV data network comprising a node serving a local area with IPTV service, the node comprising an FCC/Retr (fast channel change/retransmission) server having a means for self-discovery of a location-based FCC/Retr service profile and for installing said service profile at the node.

2. A network as claimed in Claim 1, wherein the FCC/Retr service profile includes channels based upon one or more of location, user profiles served from the location, other service profiles, popularity of channel, recommendations, local preferences or other factors.

3. A network as claimed in Claim 1 or 2, wherein the service profile is dynamically variable as parameters change.

4. A network as claimed in any preceding claim, wherein the FCC/Retr server is adapted to supply its network identification to a service configuration server (SCS), the SCS being arranged to determine a service profile corresponding to the location of the FCC/Retr server, to provide this to the FCC/Retr server and the FCC/Retr server comprises means for installing the service profile.

5. A method of configuring service profiles of an IPTV, cable or Internet TV system on a network, comprising providing a node serving a plurality of users in a locality, the node including an FCC/Retr (fast channel change/retransmission) server, the method comprising using self-discovery and installation of a service profile in order to populate the node with a service profile.

6. A method as claimed in Claim 5, wherein the service profile is dynamically variable over time.

7. A method as claimed in Claim 5 or 6, where the service profile includes at least: network address of the FCC/Retr channels and optionally related FCC/Retr service configuration metadata such as the size of the cache window and content description.

8. A method as claimed in Claim 7, wherein the service profile is provided at boot-up of the node, the FCC/Retr server supplying its identification to request a location based FC/Retr service profile.

9. A method as claimed in any of Claims 5 to 8, wherein the FCC/Retr module is arranged to supply its network identification to a service configuration server, the server is arranged to generate a service profile corresponding to the location of the FCC/Retr server and to provide this to the FCC/Retr module and the FCC/Retr module is arranged to install the service profile.

10. A method as claimed in Claim 9, wherein the service configuration server generates a service profile from stored data including one or more of user profile, content profile, other service profiles, and a database of at least channel popularity and existing desirability of channel provision at a particular locality.

11. A method as any of Claims 5 to 10, wherein each service profile comprises data of a number of channels to be made available as FCC/Retr service and provides one or more network addresses from which the channel can be obtained, captured or redirected.

12. A method as claimed in Claim 11, wherein a service profile for a channel indicates whether that channel is available at a local or a remote location and provides the address thereof.

13. A method as claimed in Claim 12, wherein a service profile comprises {Profile - Channel - Local (IP address to capture from)/Remote (IP address to redirect or retrieve from) - Master FCC IP (can be shared) - Master Retr IP (can be shared) - Other}.

14. A method of operating an IPTV service over a network, including a configuration method as claimed in any of Claims 5 to 13.

15. An Access Node adapted for self-discovery of channel profile, in an IPTV, cable or Internet TV environment.

## Amended claims

### Amended claims in accordance with Rule 137(2) EPC.

**1.** An IPTV, cable or Internet TV data network comprising a node (10) serving a local area with IPTV service, the node comprising an FCC/Retr (fast channel change/ retransmission) server (10), **characterised by** the FCC/Retr having a means for self-discovery of a location-based FCC/Retr service profile (3) and for installing said service profile at the node.

**2.** A network as claimed in Claim 1, wherein the FCC/Retr service profile includes channels based upon one or more of location, user profiles served from the location, other service profiles, popularity of channel, recommendations or local preferences.

**3.** A network as claimed in Claim 1 or 2, wherein the service profile is dynamically variable over time.

**4.** A network as claimed in any preceding claim, wherein the FCC/Retr server (10) is adapted to supply its network identification to a service configuration server (SCS) (2), the SCS being arranged to determine a service profile corresponding to the location of the FCC/Retr server, to provide this to the FCC/Retr server and the FCC/Retr server comprises means for installing the service profile.

**5.** A method of configuring service profiles of an IPTV, cable or Internet TV system on a network, comprising providing a node serving a plurality of users in a locality, the node including an FCC/Retr (fast channel change/retransmission) server (10), **characterised in that** the method comprises using self-discovery and installation of a service profile (3) in order to populate the node with a service profile.

**6.** A method as claimed in Claim 5, wherein the service profile is dynamically variable over time.

**7.** A method as claimed in Claim 5 or 6, where the service profile includes at least: network address of the FCC/Retr channels and related FCC/Retr service configuration metadata.

**8.** A method as claimed in Claim 7, wherein the service profile is provided at boot-up of the node, the FCC/Retr server (10) supplying its identification to request a location based FC/Retr service profile (3).

**9.** A method as claimed in any of Claims 5 to 8, wherein the FCC/Retr server (10) is arranged to supply its network identification to a service configuration server, the server is arranged to generate a service profile corresponding to the location of the FCC/Retr server and to provide this to the FCC/Retr server and the FCC/Retr server is arranged to install the service profile.

**10.** A method as claimed in Claim 9, wherein the service configuration server generates a service profile from stored data including one or more of user profile, content profile, other service profiles, and a database of at least channel popularity and existing desirability of channel provision at a particular locality.

**11.** A method as any of Claims 5 to 10, wherein each service profile comprises data of a number of channels to be made available as FCC/Retr service and provides one or more network addresses from which the channel can be obtained, captured or redirected.

**12.** A method as claimed in Claim 11, wherein a service profile for a channel indicates whether that channel is available at a local or a remote location and provides the address thereof.

**13.** A method as claimed in Claim 12, wherein a service profile comprises {Profile - Channel - Local (IP address to capture from)/Remote (IP address to redirect or retrieve from) - Master FCC IP (can be shared) - Master Retr IP (can be shared) - Other}.

**14.** A method of operating an IPTV service over a network **characterised by** including a configuration method as claimed in any of Claims 5 to 13.

**15.** An Access Node **characterised in that** it is adapted for self-discovery of channel profile, in an IPTV, cable or Internet TV environment.
